# EUROPÄISCHE PATENTSCHRIFT

(11) **EP 3 242 014 B1**
(45) Veröffentlichungstag und Bekanntmachung des Hinweises auf die Patenterteilung: **02.10.2019**
(21) Anmeldenummer: 16167979.0
(22) Anmeldetag: 02.05.2016
(51) Int. Cl.: F03D 80/00, F03D 13/10

(54) **GONDELVERKLEIDUNG FÜR EINE WINDENERGIEANLAGE**
NACELLE COVER FOR A WIND POWER PLANT
HABILLAGE DE NACELLE POUR UNE EOLIENNE

(43) Veröffentlichungstag der Anmeldung: 08.11.2017
(73) Patentinhaber: Nordex Energy GmbH, 22419 Hamburg (DE)
(72) Erfinder: Schaale, Thomas, 18055 Rostock (DE); Kathöfer, Sebastian, 17168 Gross Wüstenfelde (DE)
(74) Vertreter: Garrels, Sabine

(56) Entgegenhaltungen:
- WO-A1-2012/105971
- DE-A1- 10 340 560
- DE-A1-102010 025 546

## Beschreibung

Die vorliegende Erfindung betrifft die Gondelverkleidung einer Windenergieanlage, welche aus einem annähernd quaderförmigen Körper besteht und aus mehreren Teilen zusammengesetzt ist.

Bisher werden die Bauteile der Gondelverkleidung so ausgeführt, dass mindestens eine Flächenkante eines Bauteils aufgrund von Teilungsebenen und Dichtungskonzept als freie Bauteilkante ausgeführt wird, die keinerlei formbedingte Steifigkeitsmerkmale besitzt. Dadurch kommt es in der Produktion (Zusammenbau) der Bauteile auch vermehrt zu Beul-Effekten entlang der freien Bauteilkanten. Der Beul-Effekt lässt sich beheben, indem die Bauteile aufwendig in kleinen Abständen miteinander verschraubt werden.

Allgemein sind bei der Konstruktion von Gondelverkleidungen zwei Entwicklungstrends zu verzeichnen: 1. Großteil-Konzept und 2. Kleinteil-Konzept.

Das Großteil-Konzept verfolgt das Ziel, mit möglichst einem oder wenigen Teilen auszukommen, um den Fertigungsaufwand in der Produktion gering zu halten. Das Kleinteil-Konzept hingegen verfolgt die Idee, eine Gondelverkleidung in möglichst viele, gut zu transportierende Kleinteile aufzuteilen, die später zu großen Teilen bzw. zur gesamten Gondelverkleidung zusammengesetzt (verbunden) werden müssen.

In EP 2304231 B1 wird ein Gehäuse für die Gondel einer Windenergieanlage mit einer Tragstruktur aus Rohren oder Streben offenbart. Einzelne Verkleidungssegmente weisen einen versteifenden Rahmen auf, welcher mit fest verbundenen Schalenelementen aus Kunststoff, insbesondere GFK, versehen ist. Die Rahmen der Verkleidungssegmente sind ihrerseits mit der Tragstruktur verbunden.

Eine Gondel für eine Windturbine, veröffentlicht in US 20100232977 A1, besteht aus verschiedenen Einzelteilen, welche zusammengesetzt eine Gondelverkleidung bilden. Die Einzelteile betreffen insbesondere ein Bodenteil mit angeformten Seitenflächen, zwei Zwischenteile und eine Oberseite, welche über Sparren miteinander verbunden werden.

Auch in EP 2314865 A1 wird ein Gehäuse für eine Gondel offenbart, welches aus mindestens zwei Teilen, einem gekrümmten Unterteil und einem gekrümmten Oberteil, besteht. Das Unterteil und das Oberteil weisen Verstärkungsrippen auf und sind mit angeformten Laschen versehen, durch welche beide Teile miteinander verbunden werden.

In DE 10340560 A1 wird eine Verkleidung für Windkraftanlagen in Modulbauweise offenbart, welche aus Sandwichbauteilen in drei Grundformen für Ecke, Kante und Fläche besteht. Die Module sind miteinander verbindbar und können in Länge, Breite und Höhe variieren. Dadurch können Gehäuse mit unterschiedlichen Geometrien aus drei Grundformen hergestellt werden.

In WO 2012/105971 wird eine Gondel einer Windkraftanlage offenbart, welche die Entfernung und den Austausch von großen Komponenten erleichtern soll. Die Gondel besteht aus einem Unterteil und einem Dach. Das Unterteil ist als große "Wanne" ausgebildet, so dass alle Komponenten der Gondel in dieser Wanne Platz finden. Der Deckel ist ähnlich wie die Wanne mehrfach nach innen gekantet. Dadurch entstehen neben der nach unten gerichteten Deckelwand Stege, die nach innen gerichtet sind und an welchen der Deckel mittels Schrauben auf einer Schiene befestigt wird.

### Darstellung der Erfindung

Aufgabe der Erfindung ist es, möglichst große und flache Bauteile für Gondelverkleidungen zu entwickeln, welche gut transportierbar sind. Dabei soll die erforderliche geometrische Steifigkeit im hohen Maße gewährleistet sein.

Die Lösung der Aufgabe erfolgt durch die in den Ansprüchen aufgezeigten Merkmale des Hauptanspruchs. Ausgestaltungen werden in den Unteransprüchen beschrieben.

Die erfindungsgemäße Gondelverkleidung für eine Windenergieanlage besteht aus einem annähernd quaderförmigen Körper und ist selbsttragend ausgeführt. Der quaderförmigen Körper ist aus mehreren Teilen, die eine Innenseite und eine Außenseite aufweisen, zusammengesetzt. Die Teile sind in der Regel rechteckig und als Flächenelement ausgebildet, wobei das Flächenelement Flächenkanten aufweist. Jedes Flächenelement ist an allen seinen Flächenkanten und zur Innenseite gerichtet mit umlaufenden Stegen versehen und an der Außenseite des Flächenelements sind an den Flächenkanten umlaufende Fasen oder Rundungen angeformt. Die Form der Teile kann aus designerischen Gründen auch annähernd rechteckig sein. Beispielsweise ist ein trapezförmiges Auslaufen der Flächenelemente zum Rotor und/oder zum Heck hin möglich. Eine solche oder ähnliche Form ist unabhängig von der Gestaltung der umlaufende Fasen oder Rundungen.

In einer Ausführungsform setzt sich das Flächenelement aus mehreren Segmenten zusammen, wobei dieses zusammengesetzte Flächenelement als komplettes Teil umlaufende Fasen oder Rundungen an allen seinen Flächenkanten aufweist. Das aus mehreren Segmenten zusammengesetzte Flächenelement ist in einem Ausführungsbeispiel ein Dachteil und/oder ein Bodenteil. Allerdings können auch andere Teile, wie die Seitenteile oder das Heckteil aus mehreren Segmenten zusammengesetzt sein, wenn dies aus technischen oder Designerischen Gründen erforderlich ist.

Die Fasen weisen bezogen auf ihre Oberfläche des Flächenelements einen Winkel zwischen 30 und 60 Grad, bevorzugt 45 Grad auf.

Die Vorteile gegenüber bestehenden Konzepten und Lösungen für Gondelverkleidungen besteht darin, durch die neu gewonnene geometrische Steifigkeit erhebliche Materialersparnisse zu erzielen. Die erfindungsgemäßen Teile verändern ihre geometrische Form unter Belastung nicht. Desweiteren kann auf sogenannte L-Flansch-Verbindungstechniken ganz verzichtet werden und ein technisch höherwertiges Dichtungskonzept (Überlappungs-Dichtung) umgesetzt werden. Werden die Überlappungsflansche miteinander verschraubt, erhöht sich die Gesamtsteifigkeit ein weiteres Mal.

Die erfindungsgemäße Gondelverkleidung ermöglicht große dennoch flache Bauteile, die gut stapelbar und somit gut auf einem Tieflader transportierbar sind. Dazu sind alle Anformungen und/oder umlaufenden gefasten/gerundeten Flächen so ausgeführt, dass das Stapeln der Bauteile immer eine Auflage auf den großen ebenen Flächen ermöglicht, d.h. es gibt keine Hinterschnitte. Dadurch kann der Transportaufwand, beispielsweise bei einer Kranverladung, deutlich reduziert werden.

### Ausführung der Erfindung

Die Erfindung wird anhand von Zeichnungen näher erläutert. Hierzu zeigen
Fig. 1 eine skizzenhafte Darstellung einer Gondelverkleidung in perspektivischer Ansicht,
Fig. 2 eine explosive Darstellung der Gondelverkleidung und
Fig. 3 eine explosive Darstellung der Gondelverkleidung vom Heckteil aus gesehen.

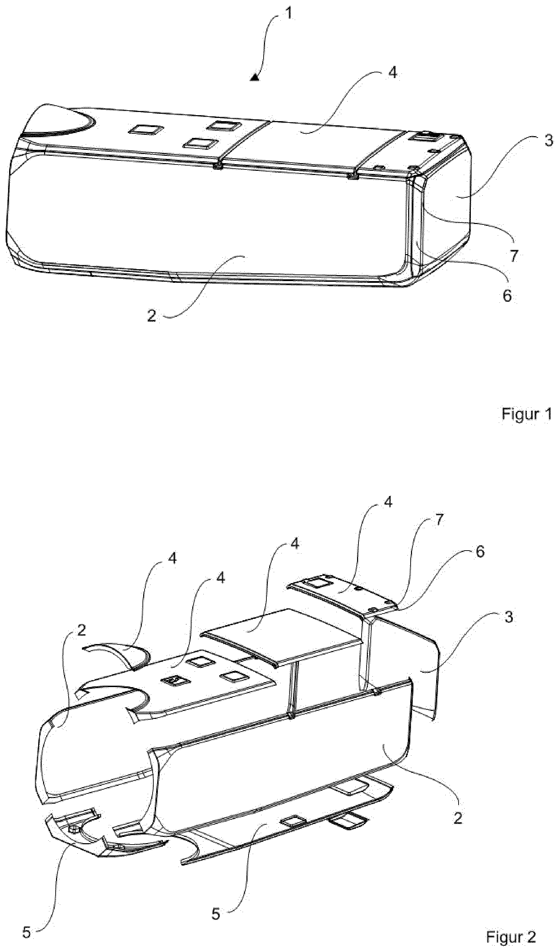

Die erfindungsgemäße Gondelverkleidung 1 für eine Windenergieanlage ist ein annähernd quaderförmiger Körper und setzt sich aus mehreren Teilen zusammen, wie beispielsweise Seitenteile 2, Heckteil 3, Dachteil 4 und Bodenteil 5. Die großflächigen ebenen Teile sind vorzugsweise aus faserverstärkten Kunststoffen (beispielsweise GFK oder CFK) hergestellt, wobei diese, wie üblich, als Sandwichaufbau mit Kern oder Volllaminat aufgebaut sein können. Ebenso können zusätzliche Versteifungselemente (Stringer) eingefügt sein. Fig. 1 zeigt dazu eine skizzenhafte Darstellung in perspektivischer Ansicht. Jeweils eine Seitenfläche des annähernd quaderförmigen Körpers ist ein einzelnes, flaches und biegesteifes Teil. Alle Teile werden separat hergestellt und nachfolgend zu der kompletten Gondelverkleidung 1 zusammengefügt, wobei jedes Teil für sich - bis auf das Heckteil 3 - an einem Tragwerk (nicht dargestellt) befestigt wird.

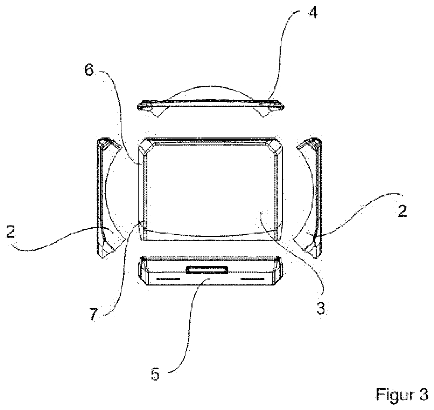

Fig. 2 zeigt eine explosive Darstellung der Gondelverkleidung 1 und Fig. 3 zeigt eine explosive Darstellung der Gondelverkleidung 1 vom Heckteil 3 aus gesehen. Das Dachteil 4 und das Bodenteil 5 können aus mehreren Segmenten zusammengesetzt sein. So besteht das Dachteil 4 in dem dargestellten Ausführungsbeispiel aus vier Segmenten und das Bodenteil 5 aus zwei Segmenten.

Ein einzelnes Teil ist in der Regel rechteckig und als Flächenelement an das Tragwerk angebunden. Jedes Flächenelement ist an allen seinen Flächenkanten mit zur Innenseite abgewinkelten umlaufenden Stegen 6 versehen, so dass ein umlaufender Rahmen entsteht. An der Außenseite des Flächenelements sind an den Flächenkanten umlaufende Fasen 7 (z.B. mit einem 45° Winkel) oder Rundungen angeformt. Durch die Stege 6 und die Fasen 7 ist das jeweilige Teil geometrisch ausgesteift. Es bildet ein Schubfeld und wird momentensteif an das Tragwerk angebunden. Die Stege 6 sind so gestaltet, dass die Fasen 7 oder Rundungen der sich gegenseitig berührenden Seitenflächen ineinander übergehen. Beim Zusammenfügen der Teile untereinander liegt die "Trennstelle" mittig in der Fase 7 oder der Rundung.

Das in dem Ausführungsbeispiel dargestellte aus mehreren Segmenten zusammengesetzte Dachteil 4 bzw. Bodenteil 5 ist in der zusammengesetzten Ausführung als ein Flächenelement zu betrachten und hat als komplettes Teil umlaufende Fasen 7 oder Rundungen an allen seinen Flächenkanten.

Die Anbindung der einzelnen Teile der Gondelverkleidung an das Tragwerk erfolgt durch innenliegende Punktanbindungen oder Trapezprofile über eine bestimmte Länge. Der Bereich der Verbindungsstellen zwischen Dachteil 4 und Seitenteilen 2, Dachteil 4 und Heckteil 3, Bodenteil 5 und Seitenteilen 2, Bodenteil 5 und Heckteil 3 kann konstruktiv als Stoß oder Überlappung gestaltet sein. Die Teile der Gondelverkleidung müssen nicht untereinander mechanisch verbunden sein, da diese bereits mit dem Tragwerk verbunden sind. So können beispielsweise das Dachteil 4 die Seitenteile 2 und die Seitenteile 2 das Bodenteil 5 überlappen, ohne dass eine mechanische Verbindung zwischen diesen notwendig ist. Das Heckteil 3 bildet eine Ausnahme, da es nicht mit dem Tragwerk verbunden ist. Es kann mit den angrenzenden Teilen beispielsweise per Schraub- oder Klammerverbindung mechanisch gekoppelt sein.

Das Dachteil 4 ist für Servicezwecke abnehmbar und sollte schon aus diesem Grund nicht mit den Seitenteilen 2 mechanisch verbunden sein.

## Patentansprüche

1. Gondelverkleidung für eine Windenergieanlage, welche aus einem annähernd quaderförmigen Körper besteht und selbsttragend ausgeführt ist, wobei der annähernd quaderförmige Körper aus mehreren Teilen, die eine Innenseite und eine Außenseite aufweisen, zusammengesetzt ist, wobei die Teile in der Regel rechteckig und als Flächenelement ausgebildet sind, wobei das Flächenelement Flächenkanten aufweist, die mit umlaufenden Fasen (7) versehen sind,
**gekennzeichnet dadurch, dass**
das Flächenelement an allen seinen Flächenkanten und zur Innenseite gerichtet mit umlaufenden Stegen (6) versehen ist und dass an der Außenseite des Flächenelements an den Flächenkanten die umlaufenden Fasen (7) oder Rundungen angeformt sind.

2. Gondelverkleidung nach Anspruch 1 **gekennzeichnet dadurch, dass** das Flächenelement sich aus mehreren Segmenten zusammensetzt, wobei dieses zusammengesetzte Flächenelement als komplettes Teil umlaufende Fasen (7) oder Rundungen an allen seinen Flächenkanten aufweist.

3. Gondelverkleidung nach Anspruch 2 **gekennzeichnet dadurch, dass** das aus mehreren Segmenten zusammengesetzte Flächenelement ein Dachteil (4) und/oder ein Bodenteil (5) ist.

4. Gondelverkleidung nach Anspruch 1 oder 2 **gekennzeichnet dadurch, dass** die Fasen (7) bezogen auf ihre Oberfläche des Flächenelements einen Winkel zwischen 30 und 60 Grad aufweisen.

5. Gondelverkleidung nach Anspruch 4 **gekennzeichnet dadurch, dass** der Winkel der Fasen (7) bezogen auf ihre Oberfläche des Flächenelements 45 Grad beträgt.

## Claims

1. Nacelle cover for a wind turbine, which consists of an approximately cuboid body and is of self-supporting design, wherein the approximately cuboid body is assembled from a plurality of parts, which have an inner side and an outer side, the parts generally being rectangular and formed as a surface element, the surface element having surface edges which are provided with circumferential chamfers (7),
**characterized in that**
the surface element is provided with circumferential webs (6) on all its surface edges and directed towards the inner side, and **in that** the circumferential chamfers (7) or curves are moulded on the outer side of the surface element at the surface edges.

2. Nacelle cover according to Claim 1, **characterized in that** the surface element is assembled from a plurality of segments, wherein this assembled surface element has as a complete part circumferential chamfers (7) or curves on all its surface edges.

3. Nacelle cover according to Claim 2, **characterized in that** the surface element assembled from a plurality of segments is a roof part (4) and/or a bottom part (5).

4. Nacelle cover according to Claim 1 or 2, **characterized in that** the chamfers (7) have an angle between 30 and 60 degrees relative to their surface of the surface element.

5. Nacelle cover according to Claim 4, **characterized in that** the angle of the chamfers (7) is 45 degrees relative to their surface of the surface element.

## Revendications

1. Habillage de nacelle pour une éolienne, qui se compose d'un corps approximativement parallélépipédique et qui est réalisé de manière autoportante, le corps approximativement parallélépipédique étant constitué de plusieurs parties qui présentent un côté intérieur et un côté extérieur, les parties étant réalisées en général sous forme rectangulaire et en tant qu'élément de surface, l'élément de surface présentant des bords de surface qui sont pourvus de biseaux périphériques (7),
**caractérisé en ce que**
l'élément de surface est pourvu, sur tous ses bords de surface et vers le côté intérieur, de bandes circonférentielles (6) et **en ce que** les biseaux périphériques (7) ou des arrondis sont formés au niveau du côté extérieur de l'élément de surface au niveau des bords de surface.

2. Habillage de nacelle selon la revendication 1, **caractérisé en ce que** l'élément de surface se compose de plusieurs segments, cet élément de surface assemblé présentant, en tant que pièce complète, des biseaux périphériques (7) ou des arrondis au niveau de tous ses bords de surface.

3. Habillage de nacelle selon la revendication 2, **caractérisé en ce que** l'élément de surface constitué de plusieurs segments est une partie de toit (4) et/ou une partie de plancher (5).

4. Habillage de nacelle selon la revendication 1 ou 2, **caractérisé en ce que** les biseaux (7) présentent, par rapport à leurs surfaces d'élément de surface, un angle compris entre 30 et 60 degrés.

5. Habillage de nacelle selon la revendication 4, **caractérisé en ce que** l'angle des biseaux (7) par rapport à leur surface d'élément de surface vaut 45°.
